Europäisches Patentamt

European Patent Office

Office européen des brevets

(19)

(11) Publication number: **0 428 991 A2**

# (12) EUROPEAN PATENT APPLICATION

(21) Application number: **90121794.3**

(22) Date of filing: **14.11.90**

(51) Int. Cl.⁵: **C08J 5/04**, C08J 9/00, C08K 7/06

(30) Priority: **21.11.89 JP 300834/89**

(43) Date of publication of application:
**29.05.91 Bulletin 91/22**

(84) Designated Contracting States:
**DE FR GB**

(71) Applicant: **PETOCA Ltd.**
**No. 3-6, Kioi-cho**
**Chiyoda-ku, Tokyo-to(JP)**

(72) Inventor: **Nagata, Yoshikazu, Kashima**
**Seiyusho**
**Kashima Oil Co.,Ltd., No.4, Touwada**
**Kamisumachi, Kashimagun, Ibarakiken(JP)**
Inventor: **Nishimura, Yoshiyuki, Kashima**
**Seiyusho**
**Kashima Oil Co.,Ltd., No.4, Touwada**
**Kamisumachi, Kashimagun, Ibarakiken(JP)**

(74) Representative: **Kraus, Walter, Dr. et al**
**Patentanwälte Kraus, Weisert & Partner**
**Thomas-Wimmer-Ring 15**
**W-8000 München 22(DE)**

(54) Composite material of carbon fibers and method for producing the same.

(57) High porosity carbon fiber composite materials are produced by pressure impregnating mat form products of pitch based carbon fibers having a bulk density of 0.001 -0.3 g/cm³ with matrix components so as to give impregnated sheet form products containing 25 - 95 weight % of matrix components and subjecting to heating treatment at a pressure lower than the impregnation pressure under such a condition that an apparent volume of the said sheet form products is increased by 1.2 times or greater.

EP 0 428 991 A2

# COMPOSITE MATERIAL OF CARBON FIBERS AND METHOD FOR PRODUCING THE SAME

Background of the invention
Field of the invention

This invention relates to high porosity composite materials reinforced by carbon fibers, and their production process.

Since the composite materials of the present invention are reinforced by carbon fibers having a large modulus of elasticity and an extremely small coefficient of thermal expansion, they are superior in dimensional stability and have superior properties as heat insulation materials, light weight structural materials, sound absorbing materials and shock absorbing materials.

Since the composite materials of the present invention contain, as their principal component, carbon fibers which have a self lubricating property, they can be used as sliding materials or packing materials by selecting a resin or by carboniZing resins or pitches.

By changing the carbonization degree of the included carbon fibers, the composite materials of the present invention can be turned to an electroconductive material or even to an insulating material. As an electroconductive material, they can be used for shielding materials from electromagnetic waves, lining materials for controlling electricity or elements for removing static electricity, etc. As an insulating material, they can be used for coating materials of electric-wire, etc.

Among the composite materials of the present invention, since those in which resin or pitch component has been carbonized have superior electroconductivity and heat resisting property as well as superior chemical stability, they can be used for high temperature insulating materials, electrode materials of fuel electric cell, filter materials used at a high temperature, etc.

Prior arts

The utilization of foamed resins is increasing steadily in wide varieties of industries, but it is known that there are various kinds of problems relating to their durability, shape-stability, etc. Particularly, there are drawbacks in inferiority of friction resisting property and strength. It is said that lowering the foaming rate of surface parts of shaped product is effective against these drawbacks

Against the problems of inferiority of strength and shape stability, methods are known in which fiber structural materials such as woven fabrics and non-woven fabrics are impregnated with a resin. The drawback of this method is that the foam structure depends on the structure of the fabrics and therefore high degree lightening is difficult.

As a method for producing a light weight fiber composite material, a method in which a gas or a foaming agent is mixed at the time of shaping, has been known. But since fibers prevent the expansion of resin, which is different from the case of a general foaming resin, foaming is concentrated in the parts of low fiber content, there is a problem that it is difficult to get a uniform foaming state. Further, even if foaming rate is increased and membranes are made to be thin, since fibers interrupt foams from breaking, there is a problem of difficulty in shaping into open cell type.

In order to solve this problem, there is disclosed an art in European patent application No. 148,763 that fibers for reinforcement having a fiber length of 50 mm or less are positioned at random in the shape of mat and gaps are enlarged with the increase of volume by heating to shape light weight fiber composite materials.

This method is certainly a superior method for producing an open-cell type foam structure, but there is a drawback that if fiber length is increased, the strength in the direction of thickness of the mat is lowered and the mat is liable to be detached thinly during the use.

Japanese laid open patent application Sho 64-40532 discloses a method for producing porous, light weight fiber composite materials by using curved carbon fibers. This method is certainly superior in the point of light weightness but it is difficult to increase resin content, there is a remarkable directionality in strength and it is a problem that detachment occurs in layer form.

Further, there is disclosed an art in Japanese laid open patent application Hei 1-190434 that three dimensional woven fabrics, woven and knitted materials having stereo bladings, piles, woven and knitted materials having crepes or, fiber assemblies having a three dimentional structure such as fleeces and having such gaps in the structure that can hold gases are used as reinforcement fibers and heat treatment is carried out at such a temperature as impregnated fiber composite materials increase their thickness.

This art has certainly an advantage in producing highly bulky fiber composite materials, but it needs

2

many steps of bending and abrading of fibers in the production of raw fiber assemblies, it has a problem of difficulty in using fibers having small elongation such as glass-fibers or carbon fibers as raw materials. Problems to be solved by the invention

The present invention has an object to improve the drawbacks of fiber composite materials having porous structure such as non-uniformity of bulk density, remarkable directionality in strength, liability of detachment in layer form, and difficulty of taking open-cell structure.

The present invention has also an object to improve the cost increase caused by the necessity of specified assemblies for reinforcement fibers in order to improve the drawback of fiber composite materials having porous struc ture.

Means for solving the problem

This invention relates to carbon fiber composite materials containing 5 - 75 weight % of carbon fibers and the remainder which principal component is thermoplastic resins, thermosetting resins or pitches (hereinafter these are generally named as matrix components), and having a porosity of 30 - 98 volume %.

The carbon fiber composite materials of the present invention can be carbon fiber composite materials in which matrix components have been carbonized. In case of the carbon-carbon fiber composite of the present invention, porosity is preferably in the range of 45 - 98 volume %:

The carbon fibers of the present invention are preferably pitch based materials. Further, the said carbon fibers are particularly preferably continuous fibers or short fibers having indefinite length.

The carbon fiber composite materials of the present invention are preferably produced by pressure impregnating mat form products of pitch based carbon fibers having a bulk density of 0.001 - 0.3 g/cm$^3$ with matrix components so as to give impregnated sheet form products containing 25 - 95 weight % of matrix components and subjecting to heating treatment at a pressure lower than the impregnation pressure under such a condition that an apparent volume of the said sheet form products is increased by 1.2 times or greater. Mat-form products are fiber assemblies such as papers or nonwoven fabrics shaped to have some extent of thickness without specified structure.

Mat-form products of the present invention may be produced from any kind of carbon fibers but preferably, pitch-based continuous carbon fibers or short carbon fibers of indefinite length. As preferable production process, there are a spunbond process, a melt-blown process and a centrifugal spinning process.

The spun bond process is a method for producing mat form product by continuously collecting fibers spun out from spinning nozzles upon a plain receiver. For transportation of spun fibers, an aspirator is generally used. It is common to use porous belts as a receiver for fibers. In case of general synthetic fiber, a stretching step may sometimes be placed intermediately but in case of the pitch fibers of the present invention, no stretching step is placed. Fibers are collected in general as con tinuous fibers.

In the melt-blown process, raw materials are spun out from spinning holes or from slits having an outlet in high speed gas stream to form fibers.

In case that spinning raw materials are pitches, a method in which spinning holes are arranged in a row in the middle of the slit form outlet hole of high speed gas stream, a method in which slits for spinning raw materials are provided, and a method in which one or several spinning holes are provided in an outlet hole of high speed gas stream are known. Spun out fibers are collected also on a plain receiver to make mat-form products.

The centrifugal spinning process is a method in which spinning raw materials are scattered into liquid stream forms from a high speed revolving pot by centrifugal force and are solidified to make fibers. Spun out fibers are also collected on a plain-form receiver to produce mat-form products.

In case of the melt-blown process and in case of the centrifugal spinning process, resultant fibers are continuous fibers in some cases or short fibers having indefinite length in other cases. "Short fibers of in definite length" are not fibers cut by cutlery, but short fibers formed to have a fiber length of several mm to several ten mm and generally broad distribution of fiber length during the spinning.

Mat-form products of pitch fibers thus obtained are subjected to infusiblization and carbonization according to a common process and made into carbon fiber mats. As for the carbonization, it is possible to carry out at a temperature of 500 - 800°C in order to keep carbonized mats in a good processing state. In order to improve electro conductive property, it is also possible to carry out the carbonization at a temperature of 1700°C or higher.

Mat-form products of carbon fibers used in the carbon fiber composite materials of the present invention are those having a bulk density of 0.001 - 0.3 g/cm$^3$.

Bulk density varies according to the strength of suction from the back side of the receiver at the time of collecting pitch fibers upon a porous receiver, the pressure applied to mats at the time of infusiblization or carbonization, or entanglement treatments applied to the mats.

Mat form products having a bulk density of 0.001 g/cm$^3$ or less is liable to be deformed by gas streams or static electricity or the like and is difficult in handling and thus is not preferable.

Those having a bulk density of 0.3 g/cm$^3$ or greater show small increase of volume by heat treatment after impregnation and it is difficult to obtain light weight carbon fiber composite materials. Bulk density is preferably in the range of 0.003 - 0.1 g/cm$^3$.

The matrix components including additives such as fillers, stabilizers, catalysts impregnated in mat form products are 25 - 95 weight % of carbon fiber composite materials. It is not preferable that matrix components are 25 weight % or less of the composite materials, because it is difficult to impregnate uniformly into carbon fiber mats. Further, in case of 95 weight % or greater, at the time of heat treatment to increase the volume, movement occurs toward the lower parts and a large fluctuation of bulk density occurs and this is not preferable. When the treatment is carried out under such a condition which prevents the flow of matrix components, the increase of the volume is difficult. Matrix components are preferably 35 - 90 weight % of carbon fiber composite materials.

The increase of the apparent volume by the heat treatment of sheet-form products after impregnation is 1.2 times or greater preferably 1.5 - 30 times. It is preferable that the volume after increase is 80 % or less of the volume before impregnation. The temperature of the heat treatment is higher than the impregnation temperature and such a temperature at which flow property of the matrix components is nice. As matrix components, thermoplastic resins or pitches are preferable, because it is possible to take such a temperature condition broader. As thermoplastic resins, polyester, polyamide, polyurethane, polycarbonate, polyethylene, polypropylene, polystyrene, polyacetale, polyphenylenesulfide, polyetherether ketones, etc. are used. To these materials, it is possible to add fillers, such as mica, talc, silica, etc. forming agents or pigments. A mixture of resins can be also used.

When a thermosetting resin is used as a matrix component, there is an advantage that resulting carbon fiber composite materials can generally be used at a high temperature. Further in case of many thermosetting resins, since uneasily graphitizable carbons are formed at the time of carbonization, they can be used as a raw material for carbon-carbon composite materials having properties different from pitches. As thermosetting resins, phenol resins, melamine resins, urea resins, epoxy resins, polyimide resins, thermosetting polyester resins, thermosetting polyurethane resins, etc. can be used. Among these resins such as Novolak of phenol resin and polyimide resins which have a thermomelting property before curing are preferable for the production of the light weight carbon fiber composite materials of the present invention.

In case of using thermosetting resins, it is necessary to carry out the treatment for increasing the volume of composite materials at a temperature lower than the temperature at which thermosetting proceeds at a high velocity.

In case where particularly light weight is necessary, it is possible to use a filler having hollow part. As a filler having hollow part, glass-balloon, silus balloon, permicullite or foamed graphite, etc. can be used.

Impregnation of carbon fiber mats with matrix components is carried out by a process in which pitch powders and mats are heated after lamination, a process of direct impregnation of melted matrix components, a process in which a matrix component is dissolved in a solvent and a mat-form product is immersed therein and the solvent is removed by drying or the like.

At the time of production of carbon fiber composite materials of the present invention, the heat treatment under the condition for increasing apparent volume is preferably carried out in a mold to shape the composite materials as inner shape of the mold. By such an arrangement, it is possible to obtain a product shaped to a certain extent and besides the bulk density of the shaped product can be controlled to a suitable value. Shaped product can take a form of flat platel curved plate, waved plate, L-figure rod, U-figure rod and half globular crust, etc.

Even if cooling is carried out after the treatment for increasing apparent volume, decrease of volume is extremely small and composite materials having increased porosity can be obtained.

Function

The mat form products of continuous carbon fibers or short carbon fibers having indefinite length can be produced by piling steadily the melt spun pitch fibers at a relatively small bulk density and then conducting the infusiblization and the carbonization.

These small bulk density mat-form products are impregnated with resins or pitches, under pressure. Then fiber shapes are recovered at a high temperature and a low pressure and surrounding gas is caused to enter the gaps of fibers to lower the bulk density. The recovery of the fiber shape is inferred to be caused by a memory effect possessed by carbon fibers.

Specific example

The present invention will be more fully explained by way of specific examples hereinafter.

Specific example 1

Carbon fiber mats having unit weight of 160 g/m² were obtained through melt-brown process from a raw material of a petroleum pitch having a softening point of 285° C and an optically anisotropic content of 100 %.

5 plates of carbon fiber mats and 6 plates of PBT film (thickness 190 μ m)were alternately piled, holded between 280° C press, preheated for 7 minutes under substan tially no load. Then press shaping was carried out for one minute under pressure of 120 Kg/cm² to obtain 2.4 mm laminated (in thickness) plates.

These laminated plates were released from pressure for 7 min. by enlarging the opening of the hot press. After allowed to expand till full gap, the resulting plates were transferred to cold press and cooled to obtain low density shaped materials.

The enlarging rate of the opening of the hot press (rate of expansion) and properties of resulting shaped materials are shown in Table 1. In addition there is no inter-layer detachment in any of the shaped materials, result is excellent.

Table 1

| Properties of the carbon fiber composite materials | | | | | | |
|---|---|---|---|---|---|---|
| Test No. | 11ˣ | 12ˣ | 1 | 2 | 3 | 4 |
| Expansion rate (times) | 1.0 | 1.1 | 2.1 | 3.3 | 6.8 | 10.0 |
| density (g/cm³) | 0.98 | 0.89 | 0.46 | 0.30 | 0.14 | 0.11 |
| flexural rigidity (kg・cm²) | 300 | 273 | 647 | 745 | 318 | 305 |
| Volume resistivity (Ω・cm) | 0.10 | 0.12 | 0.26 | 0.54 | 0.85 | 0.95 |
| Sound absorbing rate (1000 Hz) | 0.08 | 0.08 | 0.13 | 0.30 | 0.55 | 0.71 |
| Shielding rate of electromagnetic wave (dB) | 51 | | 65 | | | |
| inter-layer detachment | non | non | non | non | non | non |

Note ˣ = comparative example

Specific example 2

6 plates of carbon fiber mat having unit weight of 50 g/m² obtained from the same pitch with that of specific example 1, and 7 plates of thermoplastic polyurethane films having 22 μ m thickness are laminated alternately. After preheating for 8 minutes by holding between press at 190° C, resins were impregnated between fibers by applying 30 Kg/cm² pressure for 8 minutes. After cooling, this sheet form products were expanded about 4.0 times between the gap of 3.0 mm thickness in a heating furnace at 220° C and cooled to obtain shaped products. Property of resulting shaped products are shown in Table 2.

The polyurethane used are polyester type polyurethane Kuramilon U which is produced by KURARAY CO., LTD. The number in the Table is a type under which the kind of polyurethane is indicated.

Table 2

| Properties of polyurethane type carbon fiber composite materials | | |
|---|---|---|
| Test No. | 21 | 22 |
| kind of polyurethane | 1180 | 1195 |
| Expansion rate (times) | 3.9 | 4.0 |
| Density (g/cm$^3$) | 0.32 | 0.35 |
| Thickness (mm) | 3.0 | 2.9 |
| Flexural rigidity (Kg·cm$^2$) | 1960 | 6170 |
| Volume resistivity (Ω·cm) direction of thickness | 260 | 320 |
| Volume resistivity (Ω·cm) direction of face | 1.1 | 1.9 |

Specific example 3

In place of the PBT resin film of specific example 1, powders of mesophase pitch having a softening temperature of 290°C were used. Similarly, subjecting to heat-pressing and after impregnating in carbon fiber mats, volume was expanded by heat treatment. These were infusiblized in the air and carbonized and obtained carbon-carbon fiber comopsite material had a superior bulkiness and shape stability.

Specific example 4

In place of the PBT resin film of specific example 1, Novolack resin was subjected to pressure impregnation with a metanol solution at room temperature and allowed to expand at 60°C while drying moisture and methanol.

The resulting phenol resin composite material was subjected to further heat treatment at 160°C for 60 min. to cure the resin whereby superior light weightness and shape stability were shown.

Further a carbon-carbon fiber composite material obtained by subjecting this phenol resin composite material to a heat treatment at 1400°C in an inert gas atmosphere and then subjecting to carbonization showed superior bulkiness and shape stability.

Effectiveness of the invention

Since the composite materials of the present invention are reinforced by carbon fibers having a large modulus of elasticity and an extremely small thermal expansion and is superior in size stability, they show superior property as heat insulating materials, light weight structural materials, sound absorbing materials and shock absorbing materials.

Since the composite materials of the present invention contain carbon fibers which are self lubricating materials as their principal component, they can be used as sliding materials or packing materials by the selection of resin or by carbonization of resin or pitch.

By changing the carbonization degree of the carbon fibers contained in the composite of the present invention, they can be made into electro-conductive materials or even insulation materials. As an electro-coductive material, they can be used for shielding materials from electromagnetic waves, lining materials for controling electricity or elements for removing static electricity, etc. As insulating materials, they can be used for coating materials of electric wire, etc.

Among the composite materials of the present invention, since those in which resin or pitch component has been carboni zed have superior electroconductive property and heat-resisting property and further superior chemical stability, they can be used for high temperature heat insulating materials, electrode materials of fuel electric cell, filter materials used at a high temperature, etc.

**Claims**

1.Carbon fiber composite materials containing 5 - 75 weight % of carbon fibers and the remainder which principal component is thermoplastic resins, thermosetting resins or pitches and having a porosity of 30 - 98 volume %.

2. Carbon fiber composite materials according to claim 1 which have been subjected to carbonization.

3. Carbon fiber composite materials according to claim 1 or claim 2 in which the said carbon fibers are produced from pitches.

4. Carbon fiber composite materials according to claim 1, claim 2 or claim 3 in which the said carbon fibers are continuous fibers or short fibers having indefinite length.

5. A method for producing carbon fiber composite materials according to claim 1 or claim 2 which comprises impregnating carbon fiber mat form products having a bulk density of 0.001 - 0.3 g/cm³ with thermoplastic resins, thermosetting resins or pitches so as to give impregnated sheet form products containing 25 - 95 weight % of the resins or pitches and heat treating the said sheets at a pressure lower than the said impregnation pressure under such a condition that an apparent volume of the said sheets is increased by 1.2 times or greater.

6. A method for producing carbon fiber composite materials according to calim 5 wherein the said heat treatment for increasing the apparent volume is conducted in the gap where increase of volume and bulk density is controlled.

7. A method for producing carbon fiber composite materials according to claim 5 wherein the said heat treatment is conducted in a mold to shape the said composite materials as inner shape of the mold.

8. A method for producing carbon fiber composite materials according to claim 5, claim 6 or claim 7 wherein the said carbon fibers are produced from pitches.

9. A method for producing carbon fiber composite materials according to claim 5, claim 6 or claim 7 wherein the said carbon fibers are continuous fibers or short fibers having indefinite length.